Europäisches Patentamt

European Patent Office

Office européen des brevets

(11) Publication number: **0 376 257**
**A1**

## EUROPEAN PATENT APPLICATION

(21) Application number: **89123970.9**

(22) Date of filing: **27.12.89**

(51) Int. Cl.⁵: **B23D 59/00, //B23D55/10**

(30) Priority: **30.12.88 IT 2317388**

(43) Date of publication of application:
**04.07.90 Bulletin 90/27**

(84) Designated Contracting States:
**DE ES FR GB IT LU**

(71) Applicant: **FRIGGI S.P.A.**
**Via V. Veneto, 13**
**I-20086 Motta Visconti Milano(IT)**

(72) Inventor: **Friggi, Giovanni**
**Via V.Veneto, 13**
**I-20086 Motta Visconti Milano(IT)**

(74) Representative: **Faggioni, Marco, Dr. Ing. et al**
**FUMERO - Studio Consulenza Brevetti**
**Widenmayerstrasse 4/I**
**D-8000 München 22(DE)**

(54) Safety device for band sawing machines, apt to prevent deviations of the band from the ideal cutting plane.

(57) The device detects the elongation of the blade during the cutting operation and sends an alarm signal when the blade elongation speed exceeds a predetermined value characteristic of the machine, of the band saw blade and of the material being cut, which value can be easily determined by experiments.

In the preferred embodiment, the device consists of a linear potentiometer (14) applied to the slide (11) supporting the idle pulley (6) in order to detect its movements, and of a control unit incorporating a clock function, which measures the elongation of the blade (5) in predetermined time intervals, compares it with the critical value and provides, if necessary, to send the alarm signal.

The safety device of the present invention allows to interrupt, manually or automatically, the working of the sawing machine at the moment in which the band saw blade is about to leave the ideal cutting plane, thereby preventing faulty cuttings from being performed.

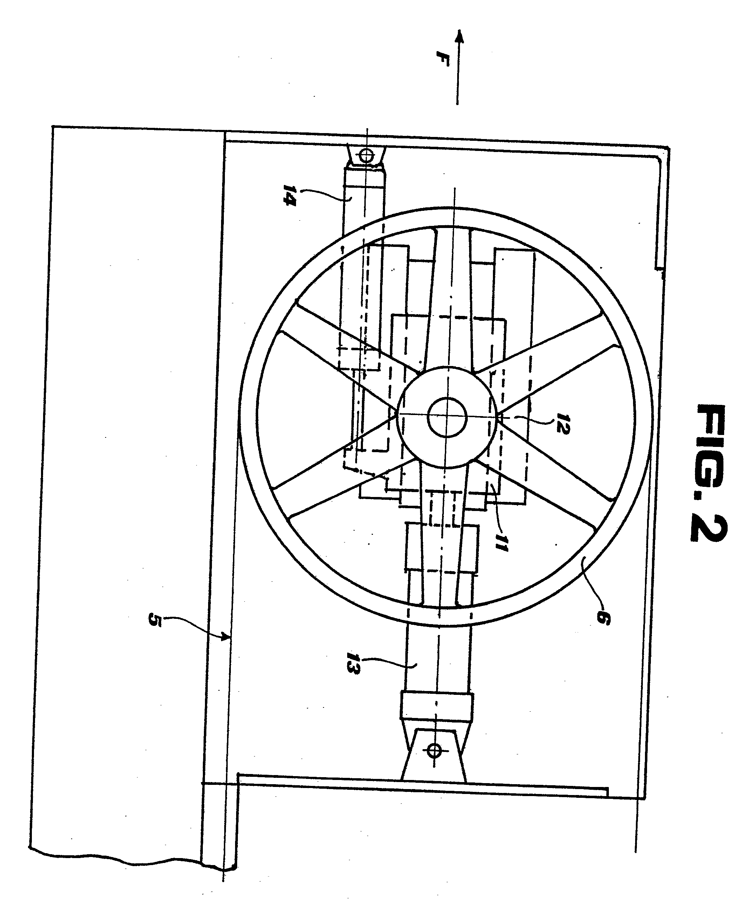

.FIG. 2

# SAFETY DEVICE FOR BAND SAWING MACHINES, APT TO PREVENT DEVIATIONS OF THE BLADE FROM THE IDEAL CUTTING PLANE

The present invention concerns a safety device for band sawing machines, especially for metallic materials, and particularly a device apt to prevent any deviations of the blade from the ideal cutting plane.

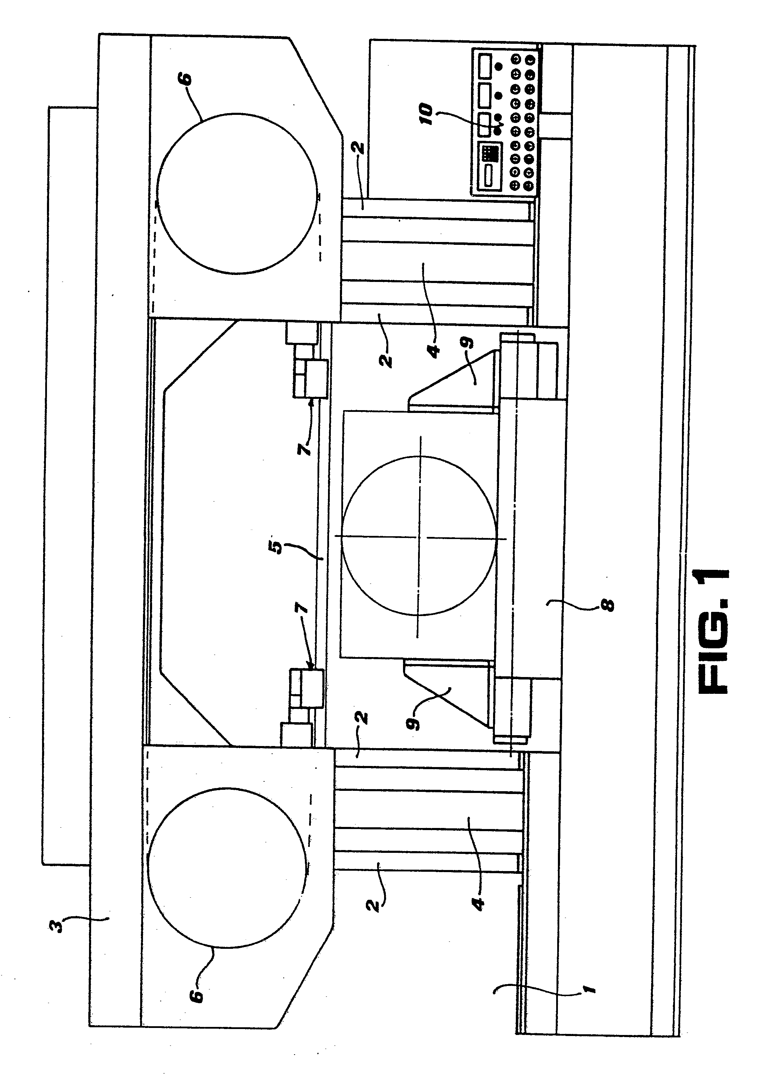

For a full understanding of the invention, a sawing machine is first of all briefly illustrated with reference to figure 1 of the drawings, which shows a "horizontal" machine wherein, that is, the blade section used for cutting is positioned horizontally. The same considerations can obviously be applied also to vertical or skew band sawing machines.

The sawing machine illustrated in figure 1 comprises a frame 1, to which there are fixed vertical uprights 2, along which slides a stiff arch structure 3 normally simply called "arch". In machines of large dimensions (as that shown in the drawing) the arch is supported by two groups of uprights along which it slides, while in machines of smaller dimensions the arch slides along a single group of uprights whereon it is supported overhanging. In both cases, inside each group of uprights there are provided rack or screw and nut means, with respective drive means, to control the up and down movement of the arch along the uprights 2.

The arch 3 houses a saw-toothed closed-ring metal band 5, or blade, which is tensioned between two pulleys 6, a rotary motion being imparted on one of said pulleys to cause the rotation of said blade. The driving pulley and the respective motor are rigidly fixed onto the arch structure, while the other idle pulley is fixed to the arch by means of a slide device allowing it to perform wide longitudinal movements. Said arrangement is necessary both to allow the machine to work with blades of different length, and to make up for the variations in length of the blade during a same cutting operation. Pressure devices are of course applied to the idle pulley in order to keep the blade under constant tension during the cutting operations.

The position of the blade is controlled by a pair of movable bla de-guides 7. Such blade-guides consist of a plurality of rollers positioned on the sides as well as on the back of the blade, for the purpose of straightening it up in the cutting area so as to cause it to firmly lie on a vertical plane, instead of the horizontal one on which it would naturally lie. In sawing machines apt to perform also horizontal cuttings, the blade-guides 7 are apt to rotate by 90° in order to position and keep the blade on the horizontal plane. A worktable 8 is positioned under the blade 5, said worktable being of course movable in respect of the sawing machine in known manner and being provided with conventional jaws 9 to block the pieces being worked.

All the electric and hydraulic controls of the machine, with the respective control devices, are normally gathered onto a single box 10 positioned close to the machine.

The sawing machines currently on the market have reached a high standard of cutting precision and of reliability, and their operation is now totally automatic, both for what concerns the repetition of a specific cutting cycle, and for what concerns the control of the arch downward speed. This control is normally performed by reckoning the power absorbed by the cutting motor, i.e. the motor rotating the cutting blade. In other words, in order to prevent the blade from being pressed too strongly against the material, thereby producing irregular cuttings, the power absorbed by the motor rotating the blade is continuously detected, and when said power approaches or exceeds a predetermined value, a control device provides to reduce the arch downward speed.

The aforedescribed type of control provides the great advantage of making the cutting operation full automatic, even in the presence of variable cutting conditions, as easily occurring, for example, when the piece being cut does not have a constant section, or else is made of different materials. Nevertheless, it has a drawback tied to the need to predetermine the limit value of the power absorbed by the cutting motor, beyond which it is necessary to reduce the arch downward speed; said value is not always easy - and, at times, actually impossible - to determine with exactness. Determining such a value - which depends on a number of variables, relating both to the material being cut and to the sawing machine - requires in fact a specific empiric knowledge of the possible different cutting conditions, which can only be within reach of a highly specialized technician; the high costs involved would hence not allow to make full use of the advantages provided by automation.

It should be said at this point that faulty cuttings can be of two fundamental types, depending on the types of different deviations of the blade from the ideal cutting plane. A first type of deviation, the so-called "deflection", occurs when the blade leaves the perpendicularity to the cutting plane and takes up a position more or less oblique in respect of said plane. A second type of deviation, the so-called "bellyness", occurs when the blade, though keeping perfectly perpendicular to the cutting plane, no longer follows a rectilinear trajectory, but takes a more or less curved configuration (belly).

While the deflection, causing an inclination of the blade, can easily be noticed by the operator who can thus intervene before performing a wrong cutting, or even a series of wrong cuttings, the bellyness is more difficult to detect, since the blade, externally to the piece being cut, often shows itself in its correct position. It is thus evident how important it is to be able to detect exactly the moment in which the bellyness starts to occur, so as to be able to act at once on the sawing machine, resetting it to work correctly.

In fact, in the practical use of band sawing machines, since it is not possible to determine exacly the limit value of the power absorbed by the motor rotating the blade - beyond which value the above mentioned deviation phenomena are likely to start - one proceeds by applying particularly high safety coefficients to the values which, by experience, have determined faulty cuttings, so as to avoid getting anywhere near to dangerous working conditions. However, this way to proceed involves wasting quite an important part of the productive capacities of a sawing machine, which could instead be used correctly if only one were to know more exactly up to what point the cutting conditions can be pushed each time, without risking faulty cuttings and thus damages to the material being cut.

The object of the present invention is therefore to supply a safety device preventing deviations of the blade of a band sawing machine from the ideal cutting plane, which provides to signal the arising of faulty cutting conditions, thereby allowing to keep the sawing machine in conditions which are quite close to the critical working conditions in which deflection or bellyness occur, without nevertheless ever reaching or exceeding said conditions.

According to the present invention, said object is reached by means of a safety device for band sawing machines, apt to prevent deviations of the blade from the ideal cutting plane, characterized in that it comprises measuring means which continuously detect the elongation of the blade during working of the sawing machine and send the respective data to a control unit, which reckons the blade elongation speed and compares said speed to the value of a critical speed, sending an alarm signal when the reckoned speed values become equal to or higher than said critical speed.

The invention will now be described in further detail, with reference to a preferred embodiment thereof, illustrated on the accompanying drawings, in which:

Fig. 1 is a schematic front elevation of a band sawing machine, equipped with the device of the present invention; and

Fig. 2 shows, on an enlarged scale, the idle pulley of the sawing machine, and the measuring means of the safety device of the present invention.

The general structure of a band sawing machine has already been described in the introductory part of the present application. Figure 2 shows in further detail one of the two pulleys, and precisely the idle pulley 6a This pulley is fixed, freely rotatable, to a slide 11 sliding along a rail 12 fixedly connected to the frame of the sawing machine. As already said, this arrangement allows to adapt the position of the pulley 6a to blades of different length, and to keep the blade properly tensioned independently from any elongations of the same which may be determined by heat and by cutting strains. For this purpose, the slide 11 is connected to the frame of the sawing machine by means of a fluid pressure cylinder-piston unit 13, which imparts a constant force on the pulley 6a in the direction of the arrow F.

The safety device of the present invention is based on a discovery made by the Applicant in the course of some experiments directed to acquiring further knowledge on the deviation phenomena. During these experiments, the position of the idle pulley was controlled in the assumption that, in the presence of deviation phenomena - and thus of a longer path of the blade in respect of the ideal rectilinear path - there would be a reduction in the useful length of the blade and thus, in the end, an approach of the idle pulley to the driving pulley.

Nevertheless, in clear contrast with the aforementioned assumption, the experiments have instead surprisingly shown - at the start of a deviation phenomenon - a sudden elongation of the blade and, consequently, a spreading apart of the idle pulley from the driving pulley. Said elongation is of an extent such as to be easily detected and, furthermore, it can be perfectly distinguished from the ordinary elongations determined by thermal expansion or by mechanical strains. It in fact takes place in very short times, of the order of a hundredth of a second, i.e. at a speed exceeding by several orders of magnitude the speed of the aforementioned ordinary elongations of the blade. The present invention has been conceived on the basis of said discovery, confirmed by successive tests.

The safety device of the present invention - in the preferred embodiment shown in figure 2 - comprises first of all a micrometric measuring instrument 14, apt to detect the movements of the slide 11. Said instrument can advantageously consist of a linear potentiometer fixed, on one side, to the frame of the sawing machine and, on the other side, to the slide 11 of the idle pulley 6a. The signals sent by the potentiometer 14 are processed into a control unit (not shown) incorporating a clock function and consisting of a suitably programmed electronic processor, which reckons the blade elongation speed and sends an alarm signal as soon as said speed reaches or exceeds the critical value.

In producing the device, the Applicant was able to ascertain that it is not indispensable to reckon the instant blade elongation speed, but it is sufficient for the control unit to continuously detect the elongation of the blade in successive time intervals of predetermined length, and to compare these elongations with the maximum allowable elongation determined by experiments. The length of each single time interval should obviously be longer than the length of time in which the elongation of the blade takes place due to the deviation phenomena (which length of time, as said, is of a few hundredths of a second), and shorter than the minimum length of time required for the ordinary phenomena determining blade elongation to cause an elongation of the same extent (some minutes). Preferably, therefore, the length of the time intervals in which the control unit measures the elongation of the blade, is chosen as being between a few seconds and a few tens of seconds, for instance between 1 and 100 seconds.

According to a particularly interesting characteristic of the invention, it is possible not to be tied to the conditions of the single machine, or of the single piece being cut, in determining the allowable critical values of blade elongation in the time intervals in which said elongation is measured. In fact, since said values are in any case all far higher than those of the elongations caused by ordinary phenomena, it is possible to consider as an allowable critical value the lowest one among those determined by experiments. This allows, on one hand, to always work in safety conditions - that is, never to meet with the conditions in which the blade deviates from the ideal cutting plane -and, on the other hand, to prevent the safety device from acting with the elongations caused by ordinary phenomena. In fact such elongations, even to their greatest extent, are - for what has been said above - smaller by at least some orders of magnitude, than the allowable critical value of blade elongation as determined heretofore, and do not hence cause the operation of the alarm signal of the safety device according to the present invention.

The heretofore described and experimentally determined elongation values, determined by deviations of the blade from the ideal cutting plane, are all higher than the value of 0.1 $\mu/mm^2m$, wherein the elongation in microns is referred to the blade section in square millimeters and to its length in meters. The control unit will thus send an alarm signal as soon as an elongation, equal to or higher than said value, is detected in one of the time intervals in which the blade elongation is measured. If, on the contrary, the measured elongation is below the aforespecified value, the control unit is set back to zero on the new position taken up by the slide 11 at the end of the time interval, and starts to measure the elongation taking place in the successive time interval.

The alarm signals sent by the control unit of the device according to the invention can be used in any wanted known manner. They can hence simply warn the operator of a possible faulty working condition, and leave to him all responsibility and decision as to the kind of steps he should take, or - on the contrary - they can provide at once and automatically to interrupt the working cycle, moving the blade away from the cutting position and possibly stopping the machine, while waiting for the operator to intervene.

From the previous description, it can be appreciated how the safety device of the present invention allows to make a better profit of the machine. Since, in fact, the operator is sure to be promptly warned by the safety device when any blade deviations from the ideal cutting plane are about to take place, it is evident that the working conditions of the sawing machine, and particularly the downward speed of the arch, can be pushed well beyond the limit values of known technique, taking advantage of that part of the machine power left todate unused, due to the impossibility of determining with precision the exact working conditions which are apt to cause faulty cuttings.

The device of the present invention - instead of operating according to known technique by limiting upstream one or more working parameters of the sawing machine - acts downstream by checking directly at the start any deviations of the blade from the ideal cutting plane. This allows, on one hand, to act by restoring the optimal working conditions after the issue of each alarm signal and, on the other hand, to set the operative cutting conditions as close to the effective critical conditions as deemed appropriate.

The invention has been described with reference to a particular embodiment thereof, but it is evident that many other embodiments can be provided, differing from the one hereabove and all falling within the protection scope of the invention itself.

**Claims**

1) Safety device for band sawing machines, apt to prevent deviations of the blade from the ideal cutting plane, wherein the band saw blade is housed into a frame movable in respect of the sawing machine and slides between a driving pulley and an idle pulley, this latter being movable in respect of said frame to allow tensioning the blade, characterized in that it comprises measuring means which continuously detect the elongation of the blade during working of the sawing machine and send the respective data to a control unit, which reckons the blade elongation speed and compares said speed to the value of a critical speed, sending an alarm signal when the reckoned speed values become equal to or higher than said critical speed.

2) Safety device as in claim 1), wherein said control unit reckons the elongation of the blade in successive time intervals of predetermined length, and compares the values thus determined with the value of a critical elongation, sending an alarm signal when the reckoned elongation values are equal to or higher than said critical elongation.

3) Safety device as in claim 2), wherein the length of said time intervals is between 1 and 100 seconds and said critical elongation, referred to the blade section in mm$^2$ and to its length in m, is equal to 0.1 $\mu$/mm$^2$m.

4) Safety device as in claim 1), wherein said measuring means consist of a linear potentiometer fixed, on one side, to the frame of the sawing machine and, on the other side, to the means supporting said idle pulley.

5) Safety device as in claim 1), wherein said control unit consists of an electronic processor incorporating a clock function.

6) Safety device as in claim 1) wherein the sending of said alarm signal by the control unit starts an automatic process to stop the working of the sawing machine.

**FIG. 1**

EP 0 376 257 A1

EP 0 376 257 A1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 8, no. 108 (M-297)[1545], 19th May 1984; & JP-A-59 19 629 (AMADA K.K.) 01-02-1984 * Abstract * | 1-6 | B 23 D 59/00 // B 23 D 55/10 |
| A | DE-A-3 103 243 (K. HAUSER) * The whole document * | 1-6 | |
| A | PATENT ABSTRACTS OF JAPAN, vol. 8, no. 35 (M-276)[1472], 15th February 1984; & JP-A-58 192 716 (AMADA K.K.) 10-11-1983 * Abstract * | 1-6 | |
| A | PATENT ABSTRACTS OF JAPAN, vol. 11, no. 392 (M-653)[2839], 22nd December 1987; & JP-A-62 157 717 (KOMATDU LTD) 13-07-1987 * Abstract * | 1-6 | |
| A | PATENT ABSTRACTS OF JAPAN, vol. 11, no. 205 (M-603)[2652], 3rd July 1987; & JP-A-62 24 909 (NIPPON KOKAN K.K.) 02-02-1987 * Abstract * | 1-6 | TECHNICAL FIELDS SEARCHED (Int. Cl.5) B 23 D |
| A | GB-A-2 162 461 (AMADA CO. LTD) * Abstract * | 1-6 | |
| A | W. FLÜGGE: "Handbook of Engineering Mechanics", 1st edition, 1962, pages 33-14 – 33-15, McGRAW-HILL, New York, US * Page 33-14, line 36 * | 1,2 | |

The present search report has been drawn up for all claims

| Place of search | Date of completion of the search | Examiner |
|---|---|---|
| THE HAGUE | 02-04-1990 | MOET H.J.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)